# EUROPÄISCHE PATENTSCHRIFT

(11) **EP 0 864 356 B1**
(45) Veröffentlichungstag und Bekanntmachung des Hinweises auf die Patenterteilung: **02.10.2002**
(21) Anmeldenummer: 98102771.7
(22) Anmeldetag: 18.02.1998
(51) Int. Cl.: B01D 53/94, F01N 3/20

(54) **Einrichtung zum Nachbehandeln von Abgasen einer fremdgezündeten Brennkraftmaschine**
Apparatus for the post-treatment of exhaust gases of a spark ignition engine
Dispositif pour le post-traitement de gaz d'échappement d'un moteur à allumage commandé

(30) Priorität: 27.02.1997 DE 19707849
(43) Veröffentlichungstag der Anmeldung: 16.09.1998
(73) Patentinhaber: ADAM OPEL AG, 65423 Rüsselsheim (DE)
(72) Erfinder: von Brand, Heinz-Ewo, Dipl.-Ing., 55545 Bad Kreuznach (DE)
(74) Vertreter: Kümpfel, Heinz, Dipl.-Ing.

(56) Entgegenhaltungen:
- US-A- 5 207 734
- US-A- 5 540 208
- DATABASE WPI Section Ch, Week 9149 Derwent Publications Ltd., London, GB; Class H06, AN 91-359353 XP002078460 & JP 03 242 415 A (TOYOTA JIDOSHA KK)
- DATABASE WPI Section Ch, Week 9522 Derwent Publications Ltd., London, GB; Class E36, AN 95-166512 XP002078461 & JP 07 088 333 A (HONDA MOTOR CO LTD)

## Beschreibung

Die Erfindung betrifft eine Einrichtung zum Nachbehandeln von Abgasen einer fremdgezündeten Brennkraftmaschine mit einem im Abgasstrang angeordneten Reduktionskatalysator zur Reduktion von NOₓ-Bestandteilen im Abgas, mit einer von einer steuereinrichtung gesteuerten Zumesseinrichtung zum dosierten Einbringen eines dampfförmigen Reduktionsmittels in den Strom des dem Reduktionskatalysator zugeführten Abgases und mit einer Einrichtung zur Aufbereitung des einzubringenden Reduktionsmittels sowie mit einem in einem Entlüftungssystem eines Kraftstofftanks befindlichen Adsorbtionsfilter.

Um den insbesondere bei Magerbetrieb von fremdgezündeten Brennkraftmaschinen eintretenden erhöhten NOₓ-Anteil des Abgases zu reduzieren, ist es bekannt, das Abgas über einen Reduktionskatalysator zu führen und unter Beigabe von Kohlenwasserstoffen katalytisch zu behandeln.

Mit DE 44 04 617 A1 ist vorgeschlagen, das Reduktionsmittel aus der für die Brennkraftmaschine vorgesehenen Kraftstoffbevorratung durch einen Crackvorgang herzustellen.

Sowohl für Dieselmotoren als auch für magerbetriebene Ottomotoren wird mit DE 44 25 420 A1 vorgeschlagen, als Reduktionsmittel in einem Reduktionskatalysator zur Reduktion von NOₓ dem Abgas einen Ammoniak freisetzenden Stoff zuzusetzen.

Derartige Verfahren erfordern einen relativ großen apparativen Aufwand und sind praktisch nur bei größeren vorzugsweise stationär betriebenen Brennkraftmaschinen anwendbar.

Mit DE 44 36 415 A1 ist eine Einrichtung zum Nachbehandeln von Abgasen für eine selbstzündende Brennkraftmaschine beschrieben. Als Reduktionsmittel wird der für den Betrieb der Brennkraftmaschine verwendete Kraftstoff genutzt. Die Einrichtung zur dampfförmigen Aufbereitung des Reduktionsmittels besteht hier aus einem besonderen mit dem Abgasrohr verbundenen Aggregat, so dass die Aufwendungen dafür erheblich sind.

Mit US-A-5 207 734 wird vorgeschlagen, die von einem im Verlauf einer Tankentlüftung als Adsorbtionsfilter angeordneten Zeoliten zeitweise gebundenen Kohlenwasserstoffe mit einem Teilstrom des Abgases auszutreiben. Das dabei entstehende Gasgemisch aus Abgas und Kohlenwasserstoff-Dampfanteilen wird dann entweder dem Ansaugrohr der Brennkraftmaschine oder aber dem Abgasrohr vor einem Konverter zugeleitet. Eine spezifische Zumessung von Kohlenwasserstoff-Anteilen zur Reduktion von NOₓ ist nicht erkennbar. Auch ist nicht erkennbar, wie das Druckgefälle zwischen den Zeoliten und dem Abgasrohr überwunden werden soll.

Mit der Derwent-Publication zu JP-A-03 242 415 wird dargelegt, dass die in einem Adsorber einer Tankentlüftungsanlage zeitweilig gebundenen Kohlenwasserstoffe in Dampfform in einen NOₓ-Katalysator verbringbar sind, um somit die NOₓ-Anteile im Abgas zu reduzieren. Eine gezielte Regenerierung eines NOₓ-Speicher-Katalysators mit geringem apparativen Aufwand ist hier jedoch nicht erkennbar.

Aufgabe der Erfindung ist es, eine Einrichtung zum Nachbehandeln von Abgasen einer fremdgezündeten Brennkraftmaschine der eingangs genannten Art zu schaffen, bei der die Aufwendungen für die Aufbereitung des einzubringenden Reduktionsmittels minimiert sind und die sich besonders vorteilhaft unter den Bedingungen eines Fahrzeugantriebes realisieren lässt.

Die Erfindung löst diese Aufgabe mit den Merkmalen des Anspruches 1. Vorteilhafte Weiterbildungen der Erfindung sind Gegenstand der Unteransprüche.

Durch die Verwendung des Regenerationsgasstromes eines an einer Kraftstoffbehälter-Entlüftung ohnehin vorhandenen Adsorptionsfilters steht als Reduktionsmittel für einen Reduktionskatalysator ein tröpfchenfreier und damit sehr aktiv im Katalysator reagierenden Dampf aus Kohlenwasserstoffen zur Verfügung. Darüber hinaus kann durch die Erfindung der Adsorptionsfilter auch während Vollastphasen der Brennkraftmaschine, während denen am Ansaugrohr kein ausreichender Unterdruck für eine Adsorptionsfilter-Regenerierung vorliegt, durch die Förderung von Regeneriergas als Reduktionsmittel in den Abgasstrang regeneriert werden, so dass eine Überlastung des Adsorptionsfilters auch bei Extremsituationen, wie z. B. hohe Umgebungstemperatur, nicht zu befürchten ist. Der apparative Aufwand für die Bereitstellung eines Reduktionsmittels ist im Vergleich zu bekannten Einrichtungen sehr gering.

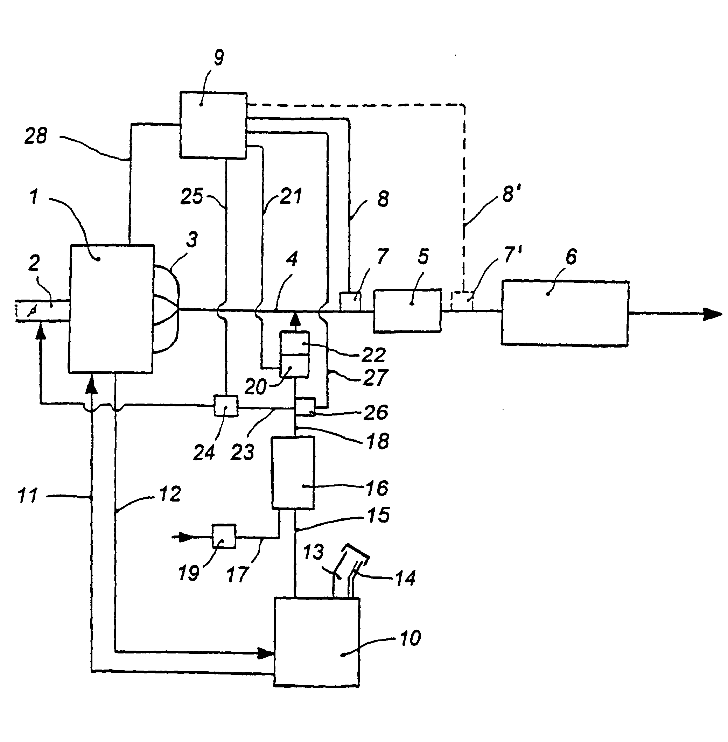

Ein Ausführungsbeispiel der Erfindung ist nachstehend anhand einer Zeichnung näher beschrieben. Die einzige Figur zeigt als Schema den Aufbau einer erfindungsgemäßen Einrichtung.

Eine vorzugsweise mit magerem Gemisch betriebene fremdgezündete Brennkraftmaschine 1 ist mit einem Ansaugrohr 2 und einem Abgaskrümmer 3 versehen. An den Abgaskrümmer 3 schließt sich ein Abgasrohr 4 an, welches in seinem Verlauf einen Reduktionskatalysator 5 zur katalytischen Reduktion von NOₓ und einen Lambda-geregelten Dreiwege-Katalysator 6 zum Abbau von HC, CO und NOₓ aufweist. Ein erster NOₓ-Sensor 7 vor dem Reduktionskatalysator 5 und evtl. auch ein zweiter NOₓ-Sensor 7' in Strömungsrichtung nach dem Reduktionskatalysator 5 erfassen den NOₓ-Anteil im Abgas. Die NOₓ-Sensoren 7, 7' sind mit Leitungen 8, 8' mit einem Motorsteuergerät 9 verbunden.

Ein Kraftstoffbehälter 10 ist mit einer nicht näher dargestellten, von dem Motorsteuergerät 9 geregelten Kraftstoff-Einspritzanlage der Brennkraftmaschine 1 durch eine Kraftstoffzuleitung 11 und eine Kraftstoffrückleitung 12 verbunden. Der Kraftstoffbehälter 10 weist einen Einfüllstutzen 13 mit einer ventilgeregelten Tankbelüftung 14 auf. Eine Tankentlüftungsleitung 15 führt vom Kraftstoffbehälter 10 zu einem als Aktivkohlefilter ausgebildeten Adsorptionsfilter 16. Das Adsorptionsfilter 16 hat eine Regenerierluftzuleitung 17 sowie eine Regenerierluftableitung 18. Die Regenerierluftzuleitung 17 ist mit der äußeren Atmosphäre verbunden. Im Verlauf der Regenerierluftzuleitung 17 ist ein Absperrventil 19 vorgesehen, welches einen Gasdurchtritt nur von der Atmosphäre her zum Adsorptionsfilter 16 zuläßt. Die Regenerierluftableitung 18 führt zu einem Regelventil 20, welches mit einer Steuerleitung 21 mit dem Motorsteuergerät 9 verbunden ist. Das Regelventil 20 ist verbunden mit einem Puls-Air-Ventil 22, welches wiederum verbunden ist mit dem Abgasrohr 4 an einer Stelle stromauf des Reduktionskatalysators 5.

Von der Regenerierluftableitung 18 zweigt vor dem Regelventil 20 eine Abzweigleitung 23 zu dem Ansaugrohr 2 ab. Im Verlauf der Abzweigleitung 23 befindet sich ein Regelventil 24, welches über eine Steuerleitung 25 mit dem Motorsteuergerät 9 verbunden ist. An der Regenerierluftableitung 18 ist ein Drucksensor 26 vorgesehen, der den Druck in der Regenerierluftableitung 18 aufnimmt und über eine Leitung 27 an das Motorsteuergerät 9 meldet.

Das Motorsteuergerät 9 ist mittels der Leitung 28 mit der Brennkraftmaschine 1 verbunden.

Die im Kraftstoffbehälter 10 während des normalen Betriebs der Brennkraftmaschine 1 verdampfenden Kraftstoffbestandteile werden durch die Tankentlüftungsleitung 15 in den Adsorptionsfilter 10 geleitet und dort durch das Adsorptionsmittel, z. B. Aktivkohle, gehalten. Zur Regenerierung des Adsorptionsfilters 16 kann durch die Regenerierluftzuleitung 17 über die Regenerierluftableitung 18 Frischluft durch das Absperrventil 19 gesaugt werden, die angereichert mit den Kohlenwasserstoff-Bestandteilen aus dem Adsorptionsfilter 16 bei niedriger Last über die Abzweigleitung 23, welche durch das vom Motorsteuergerät 9 gesteuerte Regelventil 24 in Abhängigkeit von den Parametern der Brennkraftmaschine 1 freigegeben wird, in das Ansaugrohr 2 gelangt.

Bei Magerbetrieb und hoher Last, also bei entsprechend hohem, von den NOₓ-Sensoren 7, 7' erkanntem Anteil von NOₓ-Bestandteilen im Abgas, wird vom Motorsteuergerät 9 das Regelventil 24 geschlossen, dagegen das Regelventil 20 geöffnet. Das Puls-Air-Ventil 22 läßt nun unter Ausnutzung der Pulsation des Abgases im Abgasrohr 4 die mit den Kohlenwasserstoff-Bestandteilen beladene Regenerierluft aus dem Adsorptionsfilter 16 in den Abgasstrom vor dem Reduktionskatalysator 5 gelangen. Im Reduktionskatalysator 5 dienen diese in Dampfform vorliegenden Kohlenwasserstoffe als Reduktionsmittel zur Reduktion eines erheblichen Anteils des im Abgas befindlichen NOₓ.

Über das Regelventil 20 kann die Menge des Reduktionsmittels durch das Motorsteuergerät 9 in Abhängigkeit vom NOₓ-Anteil im Abgas zugemessen werden. Dazu erhält das Motorsteuergerät 9 über die Leitung 8 von der vor dem Reduktionskatalysator 5 angeordneten NOₓ-Sonde 7 ein entsprechendes Signal. Bei Erfordernis kann nach dem Reduktionskatalysator 5 eine weitere NOₓ-Sonde 7' vorgesehen sein, die dann mit der Leitung 8' mit dem Motorsteuergerät 9 verbunden ist. Weitere für die Zumessung des Reduktionsmittels erforderlichen Werte erhält das Motorsteuergerät 9 über die Leitung 28 von der Brennkraftmaschine 1.

Damit ist es auf einfache Weise möglich, aus dem im Kraftstoffbehälter 10 mitgeführten Kraftstoff ein Reduktionsmittel für einen Reduktionskatalysator 5 aufzubereiten und dieses Reduktionsmittel dem Reduktionskatalysator 5 dosiert zuzuführen. Gleichzeitig gelingt es durch die Erfindung, einen Adsorptionsfilter 16 nicht nur während des Teillastbetriebes der Brennkraftmaschine 1, bei welchem im Ansaugrohr 2 ein ausreichender Unterdruck herrscht, zu regenerieren, sondern auch im Vollastbereich, in dem dann der Regenerier-Luftstrom aus dem Adsorptionsfilter 16 über das Regelventil 20 und das Puls-Air-Ventil 22 in das Abgasrohr 4 gelangt.

Die Erfindung ist nicht auf das Ausführungsbeispiel beschränkt. So kann z. B. anstelle des Puls-Air-Ventils 22 auch eine elektrisch angetriebene Pumpe zum Aufbau eines Druckgefälles zwischen der Regenerierluftableitung 18 und dem Abgasrohr 4 vorgesehen sein, wobei die Einschaltdauer der Pumpe vom Motorsteuergerät 9 in Abhängigkeit von den Parametern der Brennkraftmaschine 1 bestimmt wird.

## Patentansprüche

1. Einrichtung zum Nachbehandeln von Abgasen einer fremdgezündeten Brennkraftmaschine, in deren im Wesentlichen von einem Abgasrohr (4) gebildeten Abgasstrang ein Reduktionskatalysator (5) zur Reduktion von NOₓ-Bestandteilen des Abgases angeordnet ist, mit einer von einer Steuereinrichtung (9) gesteuerten Zumesseinrichtung (20) zum dosierten Einbringen eines dampfförmigen Reduktionsmittels in den Strom des dem Reduktionskatalysators (5) zugeführten Abgases in Abhängigkeit vom NOₓ-Gehalt im Abgas und mit einer Einrichtung zur Aufbereitung des einzubringenden Reduktionsmittels, wobei als Einrichtung zur Aufbereitung des einzubringenden Reduktionsmittels ein an sich bekannter im Entlüftungssystem für einen Kraftstoffbehälter (10) befindlicher Adsorptionsfilter (16) dient und als Reduktionsmittel der bei einer Regenerierung des Adsorptionsfilters (16) freiwerdende Kraftstoffdampf in den vom Abgasrohr (4) geführten Abgasstrom geleitet ist, wobei eine vom Adsorptionsfilter (16) wegführende Regenerierluftableitung (18) über ein erstes Regelventil (20), dessen Durchtrittsmenge mittels der Steuereinrichtung (9) regelbar ist, mit dem Abgasrohr (4) oberhalb des Reduktionskatalysators (5) verbunden ist, und dass Mittel zur Bildung eines Druckgefälles zwischen der vom Adsorptionsfilter (16) wegführenden Regenerierluftableitung (18) und der Eintrittsstelle dieser Regenerierluftableitung (18) in das Abgasrohr (4) vorgesehen sind.

2. Einrichtung nach Anspruch 1, **dadurch gekennzeichnet, dass** die Steuereinrichtung vom Motorsteuergerät (9) in Verbindung mit zumindest einem mit dem Abgasrohr (4) verbundenen auf das Motorsteuergerät (9) einwirkenden NOₓ-Sensor (7, 7') gebildet ist, wobei durch ein im Motorsteuergerät (9) befindliches Kennfeld eine Mengenbestimmung des Reduktionsmittels in Abhängigkeit von den Betriebsparametern der Brennkraftmaschine (1) erfolgt.

3. Einrichtung nach Anspruch 1 und 2, **dadurch gekennzeichnet, dass** das Mittel zur Bildung eines Druckgefälles ein Puls-Air-Ventil (22) zur Ausnutzung der im Abgasrohr (4) vorhandenen Druckwellen ist.

4. Einrichtung nach Anspruch 1 und 2, **dadurch gekennzeichnet, dass** das Mittel zur Bildung eines Druckgefälles eine auf den nach dem Regelventil (20) verlaufenden Bereich der vom Adsorptionsfilter (16) wegführenden Regenerierluftableitung (18) wirkende druckerhöhende Pumpe ist.

5. Einrichtung nach Anspruch 1 bis 4, **dadurch gekennzeichnet, dass** die vom Adsorptionsfilter (16) wegführende Regenerierluftableitung (18) über eine Zweigleitung (23) und ein vom Motorsteuergerät (9) angesteuertes in der Zweigleitung (23) angeordnetes zweites Regelventil (24) mit dem Ansaugrohr (2) der Brennkraftmaschine (1) verbindbar ist.

6. Einrichtung nach Anspruch 5, **dadurch gekennzeichnet, dass** die Verbindung der vom Adsorptionsfilter (16) wegführenden Regenerierluftableitung (18) über das erste Regelventil (20) zu dem Abgasrohr (4) oder über die Zweigleitung (23) und das zweite Regelventil (24) zu dem Ansaugrohr (2) alternativ erfolgt.

7. Einrichtung nach Anspruch 6, **dadurch gekennzeichnet, dass** an der vom Adsorptionsfilter (16) wegführenden Regenerierluftableitung (18) ein Drucksensor (26) angeordnet ist, dessen Signal dem Motorsteuergerät (9) zugeführt ist und für die alternative Wahl der Zuordnung der Entlüftungswege dient.

## Claims

1. Device for the aftertreatment of exhaust gases of a spark-ignition internal combustion engine in whose exhaust train, which is essentially formed by an exhaust pipe (4), is arranged a reduction catalyst (5) for the reduction of NOₓ components of the exhaust gas, with a proportioning device (20) controlled by a control device (9) for the metered introduction of a vapour-like reducing agent into the stream of exhaust gas delivered to the reduction catalyst (5) as a function of the NOₓ content of the exhaust gas and with a device for treatment of the reducing agent to be introduced, wherein an adsorption filter (16) known in the art and located in the ventilation system for a fuel tank (10) serves as the device for treatment of the reducing agent to be introduced and the fuel vapour released during a regeneration of the adsorption filter (16) is passed into the exhaust stream conducted by the exhaust pipe (4) as the reducing agent, wherein a regenerating air outlet pipe (18) leading away from the adsorption filter (16) is connected via a first regulating valve (20), whose throughput quantity can be regulated by means of the control device (9), to the exhaust pipe (4) above the reduction catalyst (5), and in that means are provided for forming a pressure gradient between the regenerating air outlet pipe (18) leading away from the adsorption filter (16) and the point of entry of this regenerating air outlet pipe (18) into the exhaust pipe (4).

2. Device according to claim 1, **characterised in that** the control device is formed by the engine control device (9) in conjunction with at least one NOₓ sensor (7, 7') connected to the exhaust pipe (4) and acting on the engine control device (9), wherein quantitative determination of the reducing agent is effected as a function of the operating parameters of the internal combustion engine (1) by a characteristic diagram located in the engine control device (9).

3. Device according to claims 1 and 2, **characterised in that** the means for forming a pressure gradient is a pulse air valve (22) for utilisation of the pressure waves present in the exhaust pipe (4).

4. Device according to claims 1 and 2, **characterised in that** the means for forming a pressure gradient is a pressure-increasing pump acting on the region of the regenerating air outlet pump (18) leading away from the adsorption filter (16) which runs after the regulating valve (20).

5. Device according to claims 1 to 4, **characterised in that** the regenerating air outlet pump (18) leading away from the adsorption filter (16) can be connected to the intake pipe (2) of the internal combustion engine (1) by a branch pipe (23) and a second regulating valve (24) controlled by the engine control device (9) and arranged in the branch pipe (23).

6. Device according to claim 5, **characterised in that** connection of the regenerating air outlet pump (18) leading away from the adsorption filter (16) is made alternatively via the first regulating valve (20) to the exhaust pipe (4) or via the branch pipe (23) and the second regulating valve (24) to the intake pipe (2).

7. Device according to claim 6, **characterised in that** on the regenerating air outlet pump (18) leading away from the adsorption filter (16) is arranged a pressure sensor (26) whose signal is delivered to the engine control device (9) and is used for the alternative choice of allocation of the ventilation paths.

## Revendications

1. Dispositif pour le post-traitement des gaz d'échappement d'un moteur à combustion interne à allumage commandé, dans la ligne d'échappement, essentiellement constituée d'un tuyau d'échappement (4), duquel est disposé un catalyseur de réduction (5) pour réduire les composants NOₓ des gaz d'échappement, avec un dispositif de dosage (20) contrôlé par un dispositif de commande (9), pour introduire en une quantité dosée, en fonction de la teneur en NOₓ des gaz d'échappement, un agent réducteur à l'état de vapeur dans le flux de gaz d'échappement envoyés au catalyseur de réduction (5) et avec un dispositif pour la préparation de l'agent réducteur à introduire, un filtre à adsorption (16), connu en soi, disposé dans le circuit de ventilation d'un réservoir à carburant (10) servant de dispositif de préparation de l'agent réducteur et la vapeur de carburant libérée lors d'une régénération du filtre à adsorption (16) étant introduite en tant qu'agent réducteur dans le flux de gaz qui circule dans le tuyau d'échappement (4), une conduite (18) d'air de régénération qui part du filtre à adsorption (16) étant contrôlée par une première vanne de réglage (20), dont le débit peut être réglé à l'aide du dispositif de commande (9), étant connectée au tuyau d'échappement (4), en amont du catalyseur de réduction (5) et des moyens étant prévus pour générer une différence de pression entre la conduite (18) d'air de régénération partant du filtre à adsorption (16) et le point d'entrée de ladite conduite (18) d'air de régénération dans le tuyau d'échappement (4).

2. Dispositif selon la revendication 1, **caractérisé en ce que** le dispositif de commande est constitué de l'appareil (9) de contrôle du moteur combiné avec au moins un détecteur de NOₓ (7, 7') lié au tuyau d'échappement (4) qui agit sur l'appareil (9) de contrôle du moteur, un calcul de la quantité d'agent réducteur en fonction des paramètres de fonctionnement du moteur à combustion interne (1) étant réalisé à l'aide d'un champ caractéristique se trouvant dans l'appareil (9) de contrôle du moteur.

3. Dispositif selon les revendications 1 et 2, **caractérisé en ce que** le moyen pour générer une différence de pression est une vanne à impulsions d'air (22) pour exploiter les ondes de pression présentes dans le tuyau d'échappement (4).

4. Dispositif selon les revendications 1 et 2, **caractérisé en ce que** le moyen pour générer une différence de pression est une pompe de surpression qui agit sur la portion située après la vanne de réglage (20) de la conduite d'air de régénération (18) partant du filtre à adsorption (16).

5. Dispositif selon les revendications 1 à 4, **caractérisé en ce que** la conduite d'air de régénération (18) partant du filtre à adsorption (16) peut être connectée à la tubulure d'admission (2) du moteur à combustion interne (1) par l'intermédiaire d'une conduite de dérivation (23) et d'une deuxième vanne de réglage (24) commandée par l'appareil (9) de contrôle du moteur, disposée dans la conduite de dérivation (23).

6. Dispositif selon la revendication 5, **caractérisé en ce que** la connexion de la conduite d'air de régénération (18) partant du filtre à adsorption (16) au tuyau d'échappement (4) par l'intermédiaire de la première soupape de régulation (20) ou à la tubulure d'admission (2) par l'intermédiaire de la conduite de dérivation (23) et de la deuxième vanne de réglage (24) est réalisée de manière alternative.

7. Dispositif selon la revendication 64, **caractérisé en ce que** dans la conduite d'air de régénération (18) partant du filtre à adsorption (16) est disposé un capteur de pression (26), dont le signal est transmis à l'appareil (9) de contrôle du moteur, et sert à la sélection alternative des associations de voies de ventilation.
